**Europäisches Patentamt**

**European Patent Office**

**Office européen des brevets**

(19)

(11) Publication number : **0 277 015 B1**

## EUROPEAN PATENT SPECIFICATION

(12)

(45) Date of publication of patent specification :
04.01.95 Bulletin 95/01

(51) Int. Cl.⁶ : **H04N 7/16**

(21) Application number : **88300724.7**

(22) Date of filing : **28.01.88**

(54) **Electric message delivery systems.**

(30) Priority : **30.01.87 JP 19982/87**
**02.02.87 JP 22071/87**
**25.02.87 JP 42305/87**

(43) Date of publication of application :
**03.08.88 Bulletin 88/31**

(45) Publication of the grant of the patent :
**04.01.95 Bulletin 95/01**

(84) Designated Contracting States :
**AT DE ES FR GB IT NL**

(56) References cited :
**EP-A- 0 144 770**
**WO-A-85/02743**
**GB-A- 2 102 660**
**GB-A- 2 168 880**
**US-A- 4 428 078**

(73) Proprietor : **SONY CORPORATION**
**7-35 Kitashinagawa 6-chome**
**Shinagawa-ku**
**Tokyo 141 (JP)**

(72) Inventor : **Matsuzaki, Atsushi c/o Patents**
**Division**
**Sony Corporation**
**6-7-35 Kitashinagawa**
**Shinagawa-ku Tokyo 141 (JP)**

Inventor : **Kobayashi, Hiroyuki c/o Patents**
**Division**
**Sony Corporation**
**6-7-35 Kitashinagawa**
**Shinagawa-ku Tokyo 141 (JP)**
Inventor : **Tomita, Hideo c/o Patents Division**
**Sony Corporation**
**6-7-35 Kitashinagawa**
**Shinagawa-ku Tokyo 141 (JP)**
Inventor : **Kikuchi, Kenichi c/o Patents Division**
**Sony Corporation**
**6-7-35 Kitashinagawa**
**Shinagawa-ku Tokyo 141 (JP)**
Inventor : **Inoue, Kenji c/o Patents Division**
**Sony Corporation**
**6-7-35 Kitashinagawa**
**Shinagawa-ku Tokyo 141 (JP)**
Inventor : **Kondo, Yoshiyuki c/o Patents**
**Division**
**Sony Corporation**
**6-7-35 Kitashinagawa**
**Shinagawa-ku Tokyo 141 (JP)**
Inventor : **Hirayasu, Masatoshi c/o Patents**
**Division**
**Sony Corporation**
**6-7-35 Kitashinagawa**
**Shinagawa-ku Tokyo 141 (JP)**
Inventor : **Ichise, Atsushi c/o Patents Division**
**Sony Corporation**
**6-7-35 Kitashinagawa**
**Shinagawa-ku Tokyo 141 (JP)**

(74) Representative : **Pilch, Adam John Michael et**
**al**
**D. YOUNG & CO.,**
**21 New Fetter Lane**
**London EC4A 1DA (GB)**

# Description

This invention relates to message delivery systems including apparatus for transmitting signals to a plurality of terminal units such as may be provided at different passenger seats in a passenger vehicle or at different seats in a stadium, theatre, or the like.

Aircraft are conventionally provided with an audio/video system to entertain passengers during flights of long duration. Aircraft are further generally provided with a reading light and an attendant call light for each passenger seat.

However, in such aircraft and other types of passenger vehicle, routine announcements, such as explanations regarding the manner in which life-jackets are to be used, are provided only at predetermined times, for example before the start of a film or the like.

Further, if an announcement is made (for example in the event of an emergency) while a film is being shown, some passengers may miss the announcement as a result of watching the film.

US Patent US-A-4584603 discloses provision of a video display individually on the back of each seat in an aircraft. However, this arrangement does not deal with the problem of potentially missing important messages or announcements, as outlined above.

According to the present invention there is provided a message delivery system comprising:

(a) a head end apparatus comprising means for generating video and related audio signals, means for generating separate audio signals, means for generating override video signals, means for generating an override command signal, encoder means for encoding said related audio signals, said separate audio signals and said override command signal, means for modulating said video signals, said override video signals, and the encoded signal from said encoder means and multiplexer means connected to said modulating means for frequency multiplexing said video signals, all of said audio signals, said override video signals, and said override command signal;

(b) a plurality of terminal units, each comprising a selecting means for selecting any desired one of said video and related audio signals, and said separate audio signals, a first tuner for receiving said selected video signals and said override video signals, a second tuner for receiving said selected audio signals and said override command signal, each of the first tuner and the second tuner being coupled to the selecting means, decoder means for decoding the output signal of said second tuner, display means for displaying said selected video signals and said override video signals, an audio output terminal for receiving said selected audio signals, and a volume control for controlling the amplitude of the selected audio signals received by the audio output terminal, wherein said first tuner is forced to receive said override video signals when said override command signal is decoded; and

(c) means for transmitting multiplexed signals generated by the multiplexer means from the head end apparatus to each terminal unit.

In a preferred embodiment of the invention, to be described in greater detail hereinafter, each terminal unit is located at a different passenger seat in a passenger vehicle such as an aircraft. The invention will now be described by way of example with reference to the accompanying drawings, throughout which like parts are referred to by like references, and in which:

Figure 1 is a block diagram showing a message delivery system according to a preferred embodiment of the present invention;

Figure 2 is a plan view showing a panel of the selection indicating apparatus forming part of Figure 1;

Figure 3 is a view of two units of the selection indicting apparatus shown in Figure 2, each attached to the back of a passenger seat;

Figure 4 is a block diagram of another preferred embodiment of the invention;

Figures 5A to 5C and 6A to 6D are diagrams showing signal formats used in embodiments of the invention;

Figures 7A to 7C are diagrams showing examples of messages of the type displayed by embodiments of the invention; and

Figure 8 is a perspective view of the interior of an aircraft equipped with a preferred embodiment of the invention.

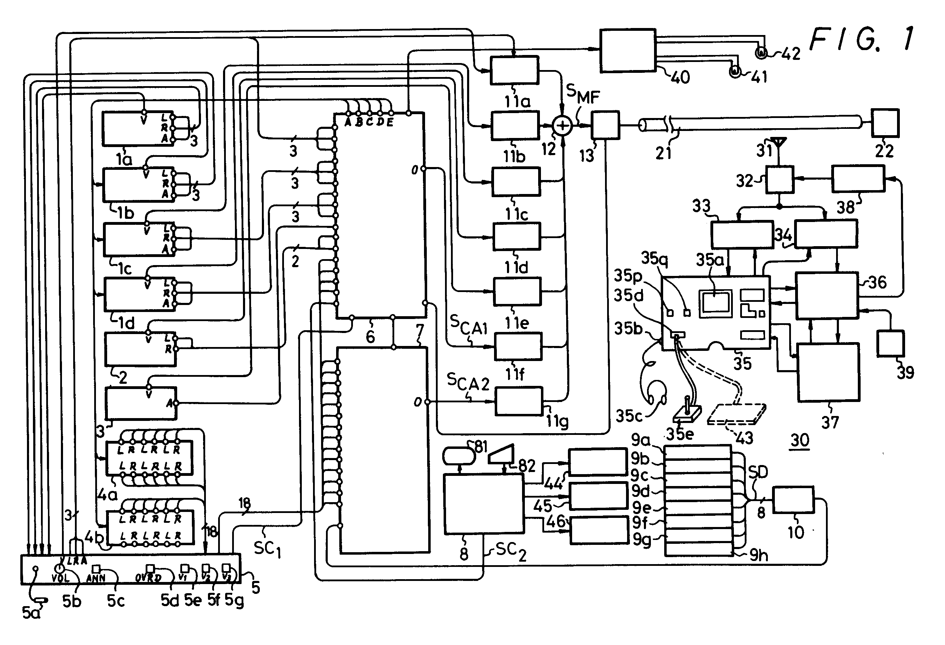

A message delivery system according to an embodiment of the present invention is shown in Figure 1, the system being capable of transmission of messages, video signals, audio signals, and other signals in an aircraft or other vehicle.

The "transmitting side" (also referred to as the "central control portion", "central control unit" or "head end apparatus") of the system will first be described with reference to Figure 1.

Referring to Figure 1, video tape recorders (VTRs) 1a to 1d are provided in the transmitting side which may, for example, be located in an aircraft crew's compartment. The VTR 1a is used for an override operation and may be loaded with a cassette tape explaining, for example, how to put on a life-jacket. Each of the VTRs 1b to 1d is loaded with a cassette tape of a video programme such as a film. Each of the VTRs 1a to 1d is provided with a terminal V for outputting a reproduced video signal and with terminals L, R and A for outputting reproduced audio signals. In an embodiment in which the VTRs 1a to 1d store bilingual programmes, the terminals L and R are respectively used for outputting left-channel and right-channel stereo audio signals in a first language, and the terminal A is used for outputting a monaural audio signal in a second language.

A television tuner 2 is provided with a terminal V for outputting a video signal and terminals L and R for outputting respectively the left and right channels of an audio signal.

Still picture reproducing apparatus 3 is capable of reproducing still picture information recorded on a compact disc (CD) read only memory (ROM), the information typically comprising maps, an airport guiding drawing, or the like. The still picture reproducing apparatus 3 is provided with a terminal V for outputting a video signal representative of a still picture and a terminal A for outputting an audio signal associated with the still picture.

Audio reproducing apparatus 4a and 4b each include three sets of compact disc players and tape recorders. The audio reproducing apparatus 4a, 4b are each respectively provided with six pairs of terminals L and R for outputting left channel and right channel audio signals.

A controller 5 comprises a microphone 5a, a volume control 5b for adjusting the level of an audio signal received by the microphone 5a, an announce key 5c, an override key 5d and pause keys 5e to 5g for setting the VTRs 1b to 1d into a pause or stop mode. Video signals from the respective terminals V of the VTRs 1a, 1b and audio signals from the respective terminals L, R and A of these recorders are supplied to the controller 5. The controller 5 is provided with a terminal V for outputting a video signal and terminals L, R and A for outputting audio signals. Usually, the terminals V, L, R and A of the controller 5 output the video signal supplied from the terminal V of the VTR 1b and the audio signals supplied from the terminals L, R and A of the VTR 1b. However, when the override key 5d is pressed to trigger an override operation, the terminals V, L, R and A of the controller 5 output the video signal supplied from the terminal V of the VTR 1a and the audio signals supplied from the terminals L, R and A of the VTR 1a. When the announce key 5c is pressed to initiate an announce operation, an audio signal from the microphone 5a is delivered to the output terminal A of the controller 5.

The system also includes CADA encoders 6 and 7 which are of the type used in the so-called cable digital audio/data transmission system (CADA system), for example as disclosed in US Patent No. US-A-4 684 981. The CADA encoders 6, 7 are capable of time-division-multiplexing a plurality of digital audio and data signals and transmitting the multiplexed signals over a vacant one channel band width (6 MHz) of a cable television (CATV) system, thus transmitting signals such as music with high efficiency and without degrading their quality. Each of the CADA encoders 6 and 7 is provided with an A/D (analog-to-digital) converter and a shift register (not shown). The time-division-multiplexing operation is carried out by converting a plurality of audio signals into digital signals in the A/D converter, inputting the digital signals in parallel to the shift register at predetermined locations, and then outputting the digital signals from the shift register in series at a high speed. Not only digital audio signals but also control data and data comprising computer software can be multiplexed by the CADA encoders in this manner.

The audio signals delivered to the output terminals L, R and A of the controller 5 are supplied to the encoder 6. The audio signals delivered to the output terminals L, R and A of the VTRs 1c and 1d are also supplied to the encoder 6. The audio signals delivered to the output terminals L and R of the tuner 2 and the output terminal A of the still picture reproducing apparatus 3 are also supplied to the encoder 6. The audio signals delivered to the six pairs of output terminals L and R of the audio reproducing apparatus 4a and to the six pairs of output terminals L and R of the audio reproducing apparatus 4b are supplied to the encoders 6 and 7 through the controller 5.

When one of the override key 5d, the announce key 5c, and the pause keys 5e to 5g of the controller 5 is pressed, the controller 5 generates control data $SC_1$ having contents corresponding to the pressed key. The control data $SC_1$ is supplied to the encoder 6.

The encoder 6 has output terminals A to E from each of which a pause or stop control signal is output in response to the control data $SC_1$. The VTRs 1b to 1d and the audio reproducing apparatus 4a and 4b are respectively controlled by the pause or stop signals delivered from the terminals A to E of the encoder 6. More specifically, when the override key 5d and the announce key 5c are pressed, the pause control signal is output from all of the terminals A to E, so that the VTRs 1b to 1d and the audio reproducing apparatus 4a and 4b all enter a pause or stop mode. When the pause keys 5e to 5g are pressed, pause or stop control signals are output from the output terminals A to C, placing the respective VTRs 1b to 1d into a pause or stop mode.

A master controller 8 is provided, comprising a computer (not shown) which controls the overall system, and which is preferably located in the cabin of the aircraft. The master controller 8 is connected to a display 81 and a keyboard 82. The master controller 8 generates control data $SC_2$ (for controlling one or more terminal apparatus units located in the receiving side of the system) in response to a command from the keyboard 82 and supplied control data $SC_2$ to the encoder 6. The control data $SC_2$ may be, for example, data for controlling the luminance of a display in the terminal apparatus, or data for polling the conditions of each passenger seat at which a terminal apparatus is located. The data can be monitored by the display 81 connected to the master controller 8.

Menu data is written in the ROM 9a, and a different set of game data is written in each of the ROMs 9b to 9h. Each data signal SD read out from the ROMs 9a to 9h (for example, for use with computer software) is supplied to a signal processing circuit 10 in which, for example, an error correcting code may be added, and is supplied to the encoder 7 thereafter.

Control data signals $SC_1$ and $SC_2$ are also supplied to the encoder 7 from the encoder 6.

A time-division-multiplexed signal $S_{CA1}$ appears at an output terminal 0 of the encoder 6. The signal $S_{CA1}$ includes the plurality of digitally converted audio signals generated in the encoder 6, and the control data $SC_1$ and $SC_2$ supplied to the encoder 6. The signal $S_{CA1}$ is supplied to a modulator 11f to be amplitude-modulated, preferably by a VSB (vestigial sideband) system.

A time-division-multiplexed signal $S_{CA2}$ appears at an output terminal 0 of the encoder 7. The signal $S_{CA2}$ includes the plurality of digitally converted audio signals generated in the encoder 7, the control data ($SC_1$ and $SC_2$) and the signal SD supplied to the encoder 7. The signal $S_{CA2}$ is supplied to a modulator 11g to be amplitude-modulated, preferably by a VSB system.

The video signal delivered to the output terminal V of the controller 5 is supplied to a modulator 11a. The audio signal delivered to the terminal A of the controller 5 is supplied both to the modulator 11a and to the encoder 6. In the modulator 11a, an ordinary television signal is generated by frequency modulating the audio signal and frequency-multiplexing the frequency modulated audio signal with the video signal. This television signal is thereafter amplitude-modulated, preferably by a VSB system.

The video signals delivered to the respective output terminals V of the VTRs 1c, 1d, the tuner 2, and the still picture reproducing apparatus 3 are respectively supplied to modulators 11b to 11e to be amplitude-modulated, preferably by a VSB system.

The modulators 11a to 11g modulate the signals supplied thereto in frequency band chosen so as to prevent cross modulation, such as in every other channel above the sixty channels of the television broadcasting band.

Output signals from the modulators 11a to 11g are supplied to an adder 12 in which they are frequency-multiplexed. The frequency multiplexed signal $S_{MF}$ from the adder 12 is supplied through a signals distributor 13 to one end of a cable 21. The cable 21 serves as a bi-directional signal transmission means. The other end of the cable 21 terminates at a terminal resistor 22. A coaxial cable whose periphery is spirally indented so as to leak a large proportion of transmitted signals is suitable for use as the cable 21.

The receiving side of the system will next be described.

Figure 1 shows a terminal apparatus unit 30, of the type that preferably is to be mounted on the back of one of a plurality of passenger seats in an aircraft.

Although only one terminal apparatus unit 30 is illustrated in Figure 1, there will preferably be the same number of terminal units 30 as there are passenger seats in the aircraft. Each terminal apparatus unit 30 is provided with an antenna 31 which receives the frequency multiplexed signal $S_{MF}$ leaking from the cable 21. The frequency-multiplexed signal $S_{MF}$ received at the antenna 31 is supplied through a signal distributor 32 to a television tuner 33 and a CADA tuner 34. The tuner 33 is capable of selectively receiving channels in the output frequency bands of the modulators 11a to 11e, while the tuner 34 is capable of selectively receiving channels in the output frequency bands of the modulators 11f and 11g. The tuners 33 and 34 are controlled in their channel selections by a selection and display apparatus 35.

Video and audio signals produced by the tuner 33 are supplied to the selection and display apparatus 35, and the time-division-multiplexed signal $S_{CA1}$ or $S_{CA2}$ produced by the tuner 34 is supplied to a CADA decoder 36. The CADA decoder 36 is constructed so as to effect substantially the inverse operations to those performed in the CADA encoders 6 and 7. More specifically, the CADA decoder 36 decodes the time-division-multiplexed signal $S_{CA1}$ (or $S_{CA2}$) or CADA data, produces a desired demultiplexed signal, and supplies the same to the selection and display apparatus 35 or to a personal computer 37. The decoder 36 is provided with a shift register and a D/A converter (not shown). The time-division-multiplexed signals $S_{CA1}$ and $S_{CA2}$ are serially input to the shift register of the decoder 36. The control data $SC_1$ or $SC_2$ is extracted in parallel form at a predetermined location in the shift register. The desired audio signal and computer software data signal SD are also extracted in parallel form at predetermined locations in the shift register, in response to control signals from the selection and display apparatus 35. The audio signal is converted into an analog signal by the D/A converter. The decoder 36 requires a pair of D/A converters respectively for the left channel and right channel of a stereo audio signal. The audio signals emerging from the decoder 36 are supplied to the selection and display apparatus 35. The computer software data SD is supplied to the personal computer 37 and written into a random access memory (RAM) therein. An embodiment of the decoder 36 is described in the above-mentioned US Patent No. US-A-4 684 981.

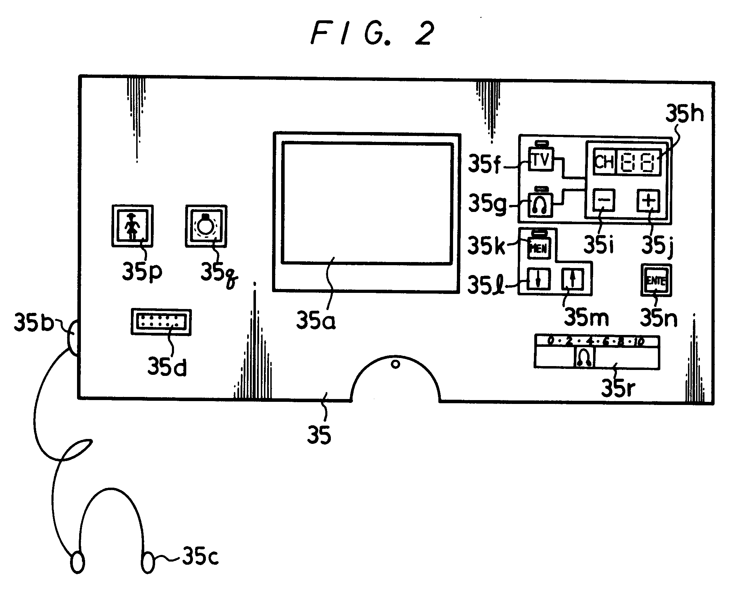

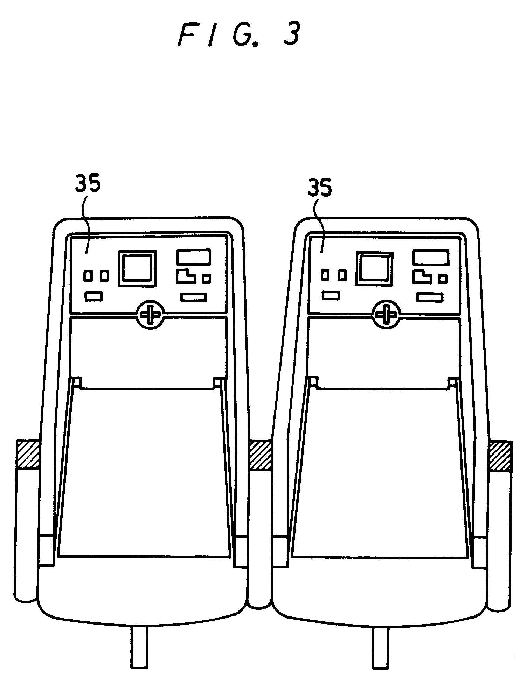

Figure 2 is an example of a preferred arrangement of the panel of the selection and display apparatus 35. The panel of the selection and display apparatus 35 may be mounted on the back of a passenger seat, as shown in Figure 3.

Figure 2 shows a display 35a, which may comprise a flat cathode ray tube or an LCD (liquid crystal display) or the like, an audio output terminal 35b for connecting a pair of headphones 35c thereto, and a game terminal 35d for connecting a joy stick 35e (shown in Figure 1), a keyboard 43 (indicated by dashed lines in Figure 1) or the like for playing games.

Further, the selection and display apparatus 35 is provided with a television selecting key 35f, a music selecting key 35g, a channel display 35h, a channeldown key 35i and a channel-up key 35j.

The television channel can be sequentially changed by first pressing the television selecting key 35f and then pressing the channel-down key 35i or the channel-up key 35j. Thus, when the channel received by the television tuner 33 is changed sequentially, the display 35a sequentially displays images reproduced from the video signals derived from the VTRs 1b to 1d, the tuner 2 and the still picture reproducing apparatus 3, and corresponding audio signals from the CADA encoder 36 are output to the audio output terminal 35b. When the audio signal is bi-lingual, two audio channels are assigned for one video display. A first language is supplied from the first channel, and a second language from the second channel.

The music channel can be sequentially changed by first pressing the music selecting key 35g and then pressing the channel-down key 35i or the channel-up key 35j. In this manner, the audio signal output from the CADA decoder 36 is changed, and the audio signals output from the audio reproducing apparatus 4a and 4b are sequentially supplied to the audio signal output terminal 35b.

The selection and display apparatus 35 is also provided with a menu display key 35k, a cursor-down key 351, a cursor-up key 35m and an enter key 35n. By pressing the menu key 35k, a video signal based on data from the menu ROM 9a is supplied to the selection and display apparatus 35 from the personal computer 37 and a menu is displayed on the display 35a.

By pressing the enter key 35n after selecting a game by moving a cursor on the display with the cursor-down key 351 or the cursor-up key 35m, a video signal and an audio signal based on data of the selected game from the game ROMs 9b to 9h are supplied from the personal computer 37 to the selection and display apparatus 35. Then, the game is displayed on the display 35a and the game sound signal is supplied to the audio output terminal 35b.

The selection and display apparatus 35 also includes an attendant call key 35p, a reading light key 35q and a volume control 35r.

The selection and display apparatus 35 (also referred to herein as "selection indicting apparatus 35") is controlled by a central processing unit (CPU) (not shown) in the CADA decoder 36 on the basis of the control data $SC_1$, $SC_2$ extracted by the CADA decoder 36.

If the override key 5d of the controller 5 is pressed to initiate an override operation while passengers are watching a film on the display 35a or listening to music, the tuner 33 is forced to receive the frequency channel having the output frequency band of the modulator 11a, the display 35a of the selection indicating apparatus 35 is forced to display an image reproduced from the video signal output to the terminal V of the VTR 1a, and the audio output terminal 35b is forced to output the audio signal supplied to the output terminal A of the VTR 1a.

When the announce key 5c of the controller 5 is pressed to initiate an announce operation, the tuner 33 is forced to receive the frequency channel having the output frequency band of the modulator 11a, and the audio output terminal 35b is forced to output the audio signal from the microphone 5a. In this event, the video signal is muted so that the display 35a does not display any image. Further, any one of the television selecting key 35f, the music selecting key 35g, the channel-down key 35i, the channel-up key 35j and the volume control 35r, or all of them, are disabled (prevented from operating). Additionally, the audio volume to all terminal units may be caused to be uniform.

When the CADA encoder 6 or 7 ceases to function, due to a malfunction for example, the control data $SC_1$ supplied to the selection indicating apparatus 35 is the same as that indicating initiation of an override operation, so that the selection indicating apparatus 35 is forced into the same mode of operation as in the override mode.

When an override operation is effected while a passenger is playing a game on the terminal display 35a, the personal computer 37 is temporarily prohibited from executing the game. Also in this case, all or some of the functions of the apparatus 35 may be disabled, such as channel selection and volume adjustment by the television selecting key 35f, the music selecting key 35g and similar.

When the override key 5d or the announce key 5c is pressed a second time to terminate the override operation or the announce operation, the selection and display apparatus 35 is released from the override condition and automatically returned to its condition as of initiation of the override or announce operation. More specifically, the VTRs 1b to 1d and the audio reproducing apparatus 4a and 4b are automatically released from the pause or stop state and set into the reproducing mode. The terminals units 30 are also returned to their selected conditions as of the initiation of the override or announce operation, so that reproduction of the video signal and the audio signal resumes from the respective interrupted points. Thus, the passengers can view a complete film or listen to a complete musical programme without missing a scene of the film or any part of the music. If the override or announcement operation had interrupted a game, the personal computer 37 resumes its execution, so that playing of the game may resume.

When the selection state is overriden (forced into a condition) as described above, the channel display 35h displays a signal indicative of the forced condition. The selection and display apparatus 35 may optionally include an additional display means for this indication.

The luminance of the display 35a is automatically controlled in accordance with the luminance of the passenger cabin in response to the control data $SC_2$. When the control data $SC_2$ requests transmission of data from one or more of the terminal units 30, the CPU within the CADA decoder 36 of each relevant unit 30 generates data indicative of a condition of the associated one of the units 30 or data detected by a sensor 39 (such as data indicating whether the seat belt is fastened and whether the seat is reclined, or the like). The requested data is supplied to a transmitter 38 to be modulated to a frequency outside the frequency bands of the modulators 11a to 11g. Then, the modulated data is supplied through the signal distributor 32 and the antenna 31 to the cable 21. The data is next supplied from the cable 21 through the signal distributor 13 to the CADA encoder 6 from which the data is supplied to the master controller 8 to be utilised.

When the attendant call key 35p on the selection indicating apparatus 35 is pressed, control data is generated from the CPU in the associated CADA decoder 36. This control data is supplied to the transmitter 38 to be modulated and is thereafter supplied through the signals distributor 32 and the antenna 31 to the cable 21. Then, the data is supplied from the cable 21 through the signal distributor 13 to the CADA encoder 6. A CPU (not shown) within the CADA encoder 6 controls a switching box 40 on the basis of the data received from the cable 21 so as to light a corresponding attendant call lamp 41.

When the reading light key 35q on the selection indicating apparatus 35 is pressed, control data is generated from the CPU in the associated CADA decoder 36. This control data is supplied to the transmitter 38 to be modulated and thereafter supplied through the signal distributor 32 and the antenna 31 to the cable 21. Then, the data is supplied from the cable 21 through the signal distributor 13 to the CADA encoder 6. The CPU within the CADA encoder 6 controls the switching box 40 on the basis of the data received from the cable 21 so as to turn on or off a corresponding reading lamp 42.

When the keyboard 43 is connected to the game terminal 35d, as shown by dashed lines in Figure 1, the CPU in the CADA decoder 36 generates control data. This control data is supplied to the transmitter 38 to be modulated and thereafter supplied through the signal distributor 32 and the antenna 31 to the cable 21. The data is next supplied from the cable 21 through the signal distributor 13 to the CADA encoder 6 from which the data is supplied to the master controller 8. In response thereto, the master controller 8 supplies the encoders 6 and 7 with a computer program with as a word processor program. The program (which will hereinafter be referred to as a word processor program for specificity) is supplied through the cable 21 to the terminal apparatus unit 30 are a frequency-multiplexed signal and is received by the personal computer 37. When a passenger inputs sentences or the like from the keyboard 43, the sentences or the like are stored in a random access memory (RAM) in the personal computer 37. The display 35a displays the inputted sentences or the like so that the passenger using the word processor can correct the sentences or the like while viewing them on the display 35a. When an instruction indicting the termination of a word processing operation is entered using the keyboard 43, data representing the sentences or the like (converted into ASCII code) stored in the RAM of the personal computer 37 are supplied through the CADA decoder 36 to the transmitter 38 to be modulated, and thereafter are supplied to the cable 21 through the signal distributor 32 and the antenna 31. Then, the data is supplied from the cable 21 through the signal distributor 13 to the CADA encoder 6 from which the data is supplied to the master controller 8. The data representing the sentences or the like may be supplied from the master controller 8 to a disc drive 44 to be recorded, for example on a floppy disc. Otherwise, the data is supplied to a printer 45 which prints the sentences or the like, or to a transmitter 46 to be transmitted to a remote location. The destination of the word processing data is selected by the user by entry of appropriate commands on the keyboard 43. Data indicative of the selected destination is supplied to the master controller 8 together with the word processing data itself. The word processor program may be previously written in the ROM provided in the personal computer 37 and any printed record generated at the printer 45 may be delivered to the passenger, such as when the passenger leaves the aircraft.

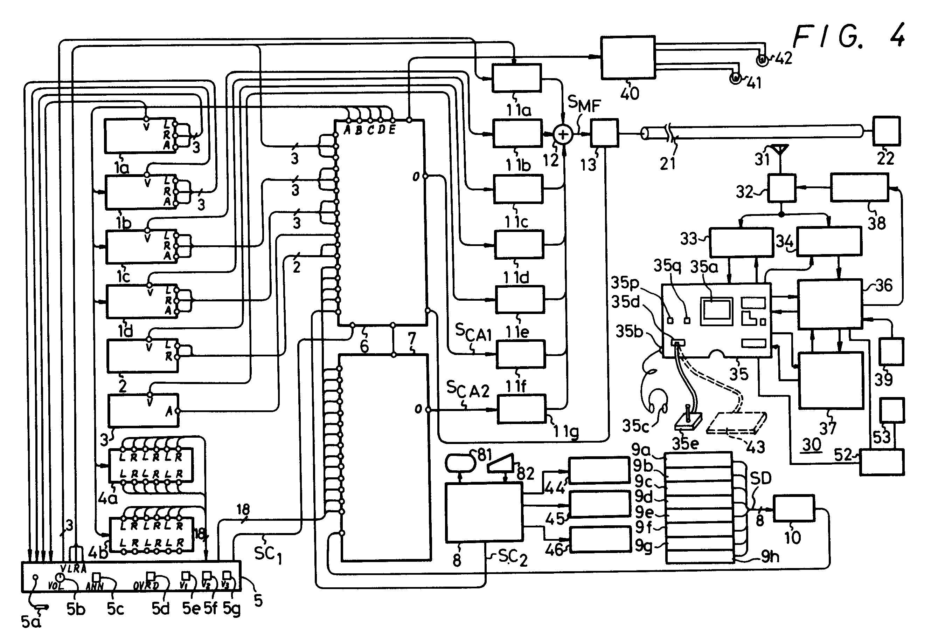

Next, a message delivery system according to another preferred embodiment of the present invention will be described with reference to Figure 4. The system shown in Figure 4 is contructed so as to be able to individually control the reception of each of the plurality of terminal units 30. The components in Figure 4 corresponding to those in Figure 1 are designated by the same reference numerals and explanation thereof will be omitted.

In Figure 4, the CADA encoder 6 generates an address signal corresponding to the terminal unit 30 which is to be controlled. The address is previously set by the master controller 8 by operating the keyboard 82 before the operation of the override key 5d or the announce key 5c. This address signal is multiplexed with the control data $SC_1$, $SC_2$ and supplied to the cable 21 to be transmitted to the receiving side of the system.

The CADA decoder 36 in each terminal unit 30 extracts the address signal from the signals $S_{CA1}$, $S_{CA2}$ which are supplied from the CADA tuner 34. The address signal extracted by each CADA decoder 36 is supplied to a respective comparator 52 wherein the extracted address signal is compared with an address signal, generated from an address generator 53 including a read-only memory (ROM) or the like provided in each terminal unit 30. The selection indicating apparatus 35 is controlled by an output signal from the comparator 52. More specifically, only when the address signal from the address generator 53, is reception of the terminal unit 30 controlled by the control data $SC_1$ and $SC_2$ in the manner described above.

The rest of the Figure 4 embodiment is constructed and arranged in the same manner as is the Figure 1 embodiment.

In the Figure 4 embodiment, each terminal apparatus unit 30 corresponding to the address signal transmitted from the transmitting side is solely controlled in reception by the control data $SC_1$ and $SC_2$. Therefore, the override, announcement, and other operations described above with reference to Figure 1, may be directed to individual ones of the plurality of terminal units 30.

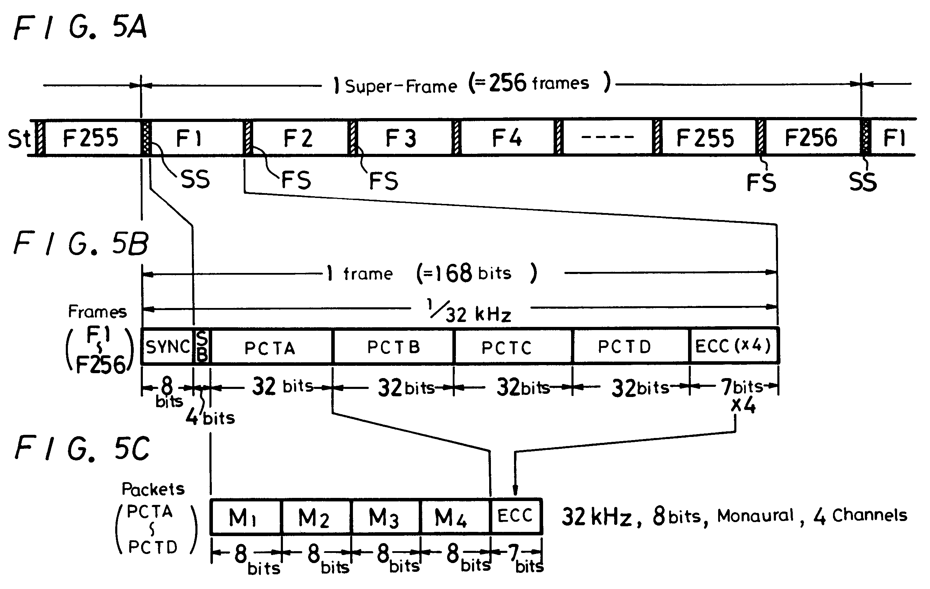

Next, signal formats of the signals $S_{CA1}$ and $S_{CA2}$ will be explained with reference to Figures 5A to 5C. The signal format is an improvement of that disclosed in the aforementioned US Patent No. US-A-4 684 981.

A multiplexed signal St shown in Figure 5A is a serial binary signal formed of a number of super-frames. One super-frame thereof is formed of 256 frames F1 to F256. As shown in Figure 5B, each frame includes 168 bits and the cyclic period of one frame is $(32 \text{ kHz})^{-1}$. Each frame has an 8-bit synchronising code SYNC, followed by a 4-bit service bit SB, followed by four 32-bit data packets PCTA to PCTD, followed by four 7-bit error correcting codes (ECCs).

There are two kinds of synchronising code SYNC as shown in Figure 5A: a super-frame-sync SS for the frame F1 at the head of the super-frame and a frame-sync FS for the subsequent 255 frames F2 to F256. The bit patterns of the super-frame-sync SS and the frame-sync FS are selected to differ from each other.

The service bits SB, the details of which will be provided below, are grouped into four groups each including 77 bits. Each service bit contains data such as a command, a seat number, and the like.

Each of the data packets PCTA to PCTD is formed of 32 bits and is independent of the others. As shown in Figure 5C, each of the packets PCTA to PCTD is divided into four channels M1 to M4, each being formed of 8 bits. Each of the channels M1 to M4 contains a PCM signal obtained by sampling the audio signals, L, R and A at a frequency of 32 kHz.

Since one frame contains four packets PCTA to PCTD and each packet has four channels M1 to M4, 16-channel audio signals can be simultaneously transmitted in time-division multiplexed form by the use of one signal St. Each channel is sampled at a sampling frequency of 32 kHz and encoded in 8 bits, so that it complies with the PCM audio standard of an 8 mm VTR.

Data signals from the ROMs 9a to 9h are converted into a time-division multiplexed bit sequence signal by the signal processing circuit 10 (shown in Figures 1 and 4). The time-division multiplexed signal output from the circuit 10 is used as one channel of the 16-channel signals. The signal output from the circuit 10 is cyclic, so that when the last bit of data from the ROMs 9a to 9h has been transmitted, the first bit of the data is retransmitted.

Each channel of the Figure 5C signal is formed of eight bits, and eight ROMs 9a to 9h are provided. Accordingly, in the channel for transmitting data from the ROMs 9a to 9h, each of the first bit to the eighth bit of the channel corresponds to data from a different one of the ROMs 9a to 9h. Therefore, the transmission rate of data from each ROM is 32 kbps.

The four error correcting codes ECCs respectively correct errors which may occur in the data packets PCTA to PCTD.

Since the signal St has a format determined as described above, the bit transmission rate thereof can be calculated as follows:

$$168 \text{ bits x } 32 \text{ kHz} \simeq 5.4 \text{ Mbps.}$$

One half of the calculated value is the Nyquist frequency, so that the signal St can be transmitted in a video signal bandwidth.

As described above, each of the encoders 6 and 7 can time-division-multiplex sixteen channels of audio signals, and the time division-multiplexed signal can be frequency-multiplexed with other video signals.

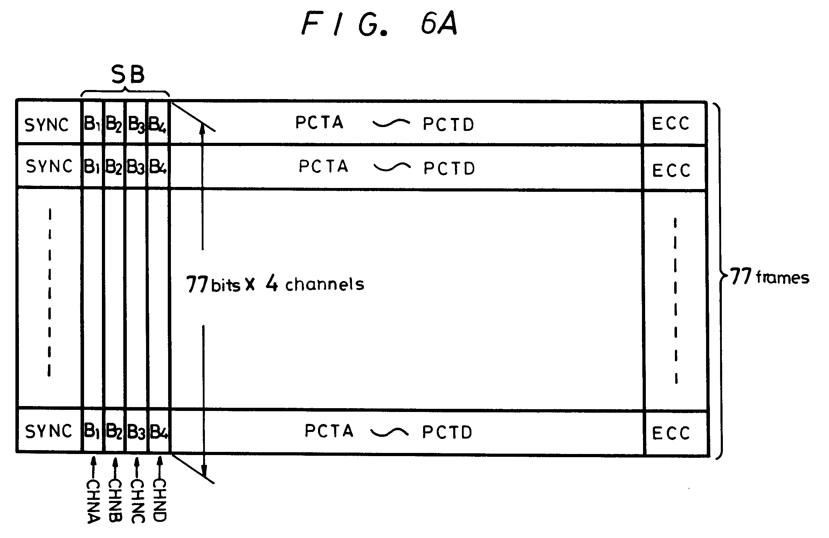

The service bits SB are preferably used in groups having a format as shown in Figures 6A to 6D. To be specific, four service bits SB are provided for every frame, and may be designated $B_1$ to $B_4$. Assuming that 77 continuous frames are vertically aligned as one group, as schematically shown in Figure 6A, the service bits SB for this group have a dimension of 77 vertical bits by 4 horizontal bits.

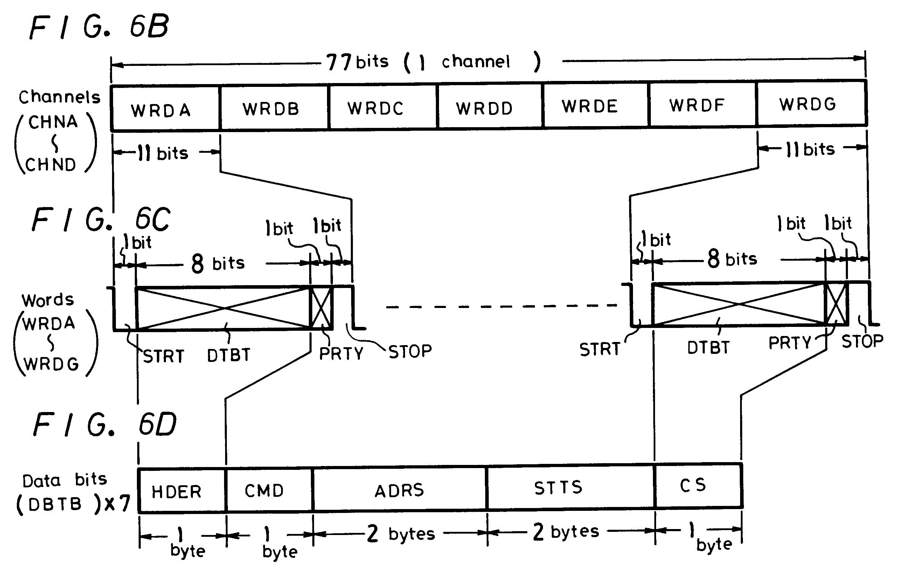

As shown in Figure 6B, the service bits SB may be vertically grouped so that each set of 77 bits is designated as one channel. A first such channel CHNA includes 77 bits $B_1$ and second to fourth such channels CHNB to CHND include bits $B_2$s to $B_4$s, respectively.

Each of the channels CHNA to CHND is divided into seven words WRDA to WRDG, each being formed of 11 bits as shown in Figure 6B. Each word has its first bit set to "0" level and used as a start bit STRT, the subsequent eight bits are used as data bits DTBT, the next one bit used as a parity bit PRTY, and the last one bit determined to be "0" level and used as a stop bit STOP, as shown in Figure 6C.

There is one data bit DTBT for each word in each of the channels CHNA to CHND, and there are seven words for each 77 frames. Therefore, there are seven data bits (seven bytes) for the 77 frames. Accordingly, there are 7 bytes x 4 channels of the data bits DTBTs in all.

The second channel CHNB has its first byte set in a predetermined bit pattern ("AA" in hexadecimal) and is used as a header HDER; its second byte is used as a command CMD for identifying a maximum of 256 kinds of commands; the third and fourth bytes are used as an address ADRS indicative of a seat number (or a number identifying a particular terminal unit); the fifth and sixth bytes are used as status information STTS indicative of data or parameters incident to the command CMD; and the last byte is used as a check sum CS.

The command CMD of Figure 6D represents the control data $SC_1$ or $SC_2$ from the controller 5 and the master controller 8. For example, when a terminal unit is forced into the message receiving state, the control data $SC_2$ for this operation is generated from the master controller 8 by operating the keyboard 82 and is transmitted as a command CMD of a signal having the Figure 6D format.

The address ADRS is arbitrarily changed by the operation of the keyboard 82, so that any or all of the terminal units may be specified.

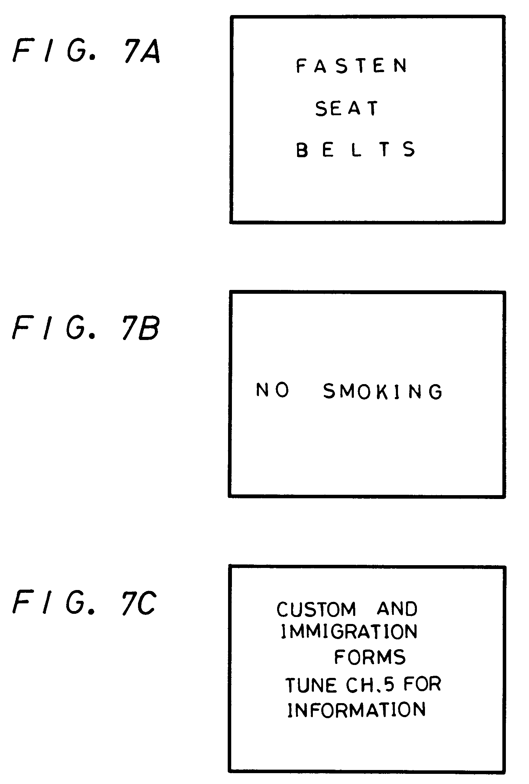

Figures 7A to 7C show examples of messages which are supplied during an override operation from the VTR 1a shown in Figures 1 and 4. Alternatively, the override message may be a moving picture showing how to put on a life-jacket or similar.

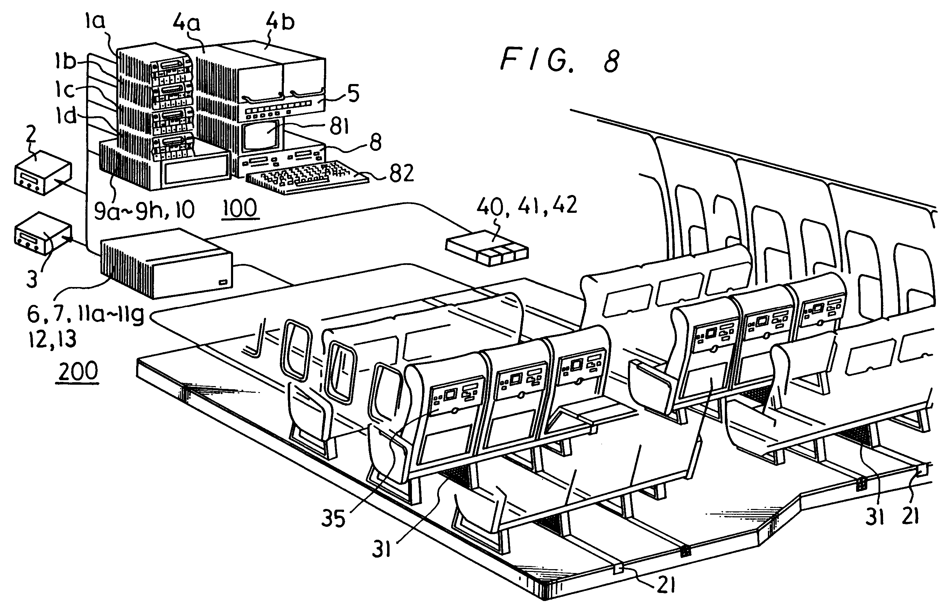

Figure 8 shows a preferred embodiment of the invention when installed in a cabin of an aircraft. The components in Figure 8 corresponding to those in Figures 1 and 4 are designated by the same reference numerals. The disc drive 44, the printer 45 and the external communication apparatus or remote location transmitter 46 are omitted from Figure 8 for simplicity. The ROMs 9a to 9b and the signal processing circuit 10 in Figures 1 and 4 are accommodated in a box 100, and the CADA encoders 6 and 7, the modulators 11a to 11g, the adder 12 and the signal distributor 13 are accommodated in a box 200.

The above embodiments have been described for the case where the system is installed in an aircraft. The system may instead be implemented in a vehicle such as a train, a bus or the like, or may be implemented to provide communication between a central unit and a terminal unit at each of a plurality of seats in a stadium, a theatre, or the like.

In the above-described embodiments, each selection and display apparatus 35 is arranged on the back of a passenger seat. Alternatively, each apparatus 35 can be mounted at the vicinity of the seat, for example, on the arm portion of the seat, on a table attached to the seat or the like. Further, in one variation, only the display 35a is arranged on the back of a seat, while other components of the terminal unit 30 are arranged on the arm portion of the seat.

According to embodiments of the present invention, when an announce or override operation is effected, one or more terminal units 30 are interrupted by the command signal $SC_1$ indicative of this operation and forced to receive and reproduce the announce or override signal. Therefore, passengers should not miss the audio and/or visual signals transmitted during the announce or override operations.

The components 1b to 1d, 4a and 4b are forced into a pause or stop state during the announce or override operation, and when the announce or override operation is terminated, the pause or stop mode of operation of each of the components 1b to 1d, 4a and 4b, is ended and the reproducing mode is resumed. At this time, each terminal unit 30 is also returned to its reproducing mode and may resume reproduction of the video signal V and the audio signals L, R, A from the point in time that the reproduction was interrupted by the announce or override operation, so that the signals are not skipped and the passengers can view a complete video programme or listen to a complete audio programme without missing any part thereof.

Since each terminal apparatus unit 30 is partially or totally prohibited from selection and operation during the announce and overdue operations, the passengers should never miss the message.

## Claims

1. A message delivery system comprising:

(a) a head end apparatus comprising means (1b to 1d) for generating video and related audio signals, means (4a, 4b) for generating separate audio signals, means (1a) for generating override video signals, means (5d) for generating an override command signal, encoder means (6, 7) for encoding said related audio signals, said separate audio signals and said override command signal, means (11a to 11g) for modulating said video signals, said override video signals, and the encoded signal from said encoder means (6, 7), and multiplexer means (12) connected to said modulating means (11a to 11g) for frequency multiplexing said video signals, all of said audio signals, said override video signals, and said override command signal;

(b) a plurality of terminal units (30), each comprising a selecting means (35f to 35j) for selecting any desired one of said video and related audio signals, and said separate audio signals, a first tuner (33) for receiving said selected video signals and said override video signals, a second tuner (34) for receiving said selected audio signals and said override command signal, each of the first tuner (33) and the second tuner (34) being coupled to the selecting means (35f to 35j), decoder means (36) for decoding the output signal of said second tuner (34), display means (35a) for displaying said selected video signals and said override video signals, an audio output terminal (35b) for receiving said selected audio signals, and a volume control (35r) for controlling the amplitude of the selected audio signals received by the audio output terminal (35b), wherein said first tuner (33) is forced to receive said override video signals when said override command signal is decoded; and

(c) means (13, 21) for transmitting multiplexed signals generated by the multiplexer means (12) from the head end apparatus to each terminal unit (30).

2. A system according to claim 1, in which said head end apparatus comprises memory means (9b to 9h) for storing television game software signals, said encoder means (6, 7) is capable of encoding said television game software signals, said multiplexer means (12) is capable of multiplexing the modulated television game software signals with the video signals, the audio signals, the override video signals, and the override command signals, each terminal unit (30) comprises means (35k to 35m) for selecting desired ones of said television game software signals, the second tuner (34) is capable of receiving the selected television game software signals and supplying the selected television game software signals to the decoder means (36), and each terminal unit (30) comprises a processor means (37) coupled to the decoding means (36) for receiving and processing the decoded selected television game software signals.

3. A system according to claim 2, in which said override video signal generating means (5d) is further operable to generate corresponding override audio signals, said encoder means (6, 7) is operable to encode the override audio signals, and said decoder means (36) is operable selectively to decode said encoded override audio signals when said override command signal is decoded.

4. A system according to claim 3, in which said head end apparatus comprises a microphone (5a), and an announce key (5c) provided at said override command signal generating means, wherein the output signals of said microphone (5a) are encoded instead of said override audio signals when said announce key (5c) is operated, and said decoder means (36) is operable selectively to decode said output signal of said microphone (5a) when said override command is decoded by said decoder means (36).

5. A system according to claim 2, in which operation of said selecting means (35f to 35j) is inhibited when said override command is decoded by said decoder means (36).

6. A system according to claim 3 or claim 4, in which operationof said selecting means (35f to 35j) and said volume control (35r) are inhibited when said override command signal is decoded by said decoder means (36).

7. A system according to claim 1, in which said override command signal generating means (5) is operable to generate pause or stop signals for said video and related audio signals generating means (1b to 1d) and said separate audio signals generating means (4a, 4b) when a key means (5c to 5g) on said override command signal generating means is operated to generate the command signal.

8. A system according to claim 7, in which said override command signal generating means (5) is operable to generate pause release signals for said video and related audio signals generating means (1b to 1d) and said separate audio signals generating means (4a, 4b) when said key means (5c to 5g) is operated again.

9. A system according to claim 4, in which a display generated at the display means (35a) is blanked when said announce key (5c) is actuated.

10. A system according to claim 2, in which operation of said processor means (37) is inhibited by said override command signal.

11. A system according to any one of the preceding claims, in which said override command signal includes at least one address signal, each said address signal identifying one of said terminal units (30), wherein each terminal unit (30) comprises means (52, 53) for processing the override command signal to determine whether the override command signal includes an address signal corresponding to the particular terminal unit (30), and in which only those terminal units (30) identified by an address signal in the command signal are forced to receive said override video signals.

12. A system according to any one of the preceding claims, wherein each terminal unit (30) is positioned at and/or serves a different passenger seat in a passenger vehicle.

13. A system according to claim 12, in which said passenger vehicle is an aircraft.

**Patentansprüche**

1. Nachrichtenliefersystem, das aufweist:

(a) eine Hauptvorrichtung, die eine Einrichtung (1b bis 1d) zum Erzeugen von Video- und dazu zugehörigen Audiosignalen aufweist, eine Einrichtung (4a, 4b) zum Erzeugen von separaten Audiosignalen, eine Einrichtung (1a) zum Erzeugen von Überblend-Videosignalen, eine Einrichtung (5d) zum Erzeugen eines Überblend-Befehlssignals, eine Codiereinrichtung (6, 7) zum Codieren der zugehörigen Audiosignale, der separaten Audiosignale und des Überblend-Befehlssignals, eine Einrichtung (11a bis 11g) zum Modulieren der Videosignale, der Überblend-Videosignale und des codierten Signals von der Codiereinrichtung (6, 7), und eine Multiplexereinrichtung (12), die mit der Modulationseinrichtung (11a bis 11g) verbunden ist, um die Videosignale, alle Audiosignale, die Überblend-Videosignale und das Überblend-Befehlssignal einer Frequenz-Multiplexverarbeitung zu unterwerfen;

(b) eine Vielzahl von Terminals (Endeinheiten) (30), von denen jedes eine Auswahleinrichtung (35f bis 35j) zum Auswählen eines gewünschten der Video- und der zugehörigen Audiosignale, der getrennte Audiosignale, einen ersten Tuner (33) zum Empfang der ausgewählten Videosignale und der Überblend-Videosignale, einen zweiten Tuner (34) zum Empfang der ausgewählten Audiosignale und des Überblend-Befehlssignals, wobei sowohl der erste Tuner (33) als auch der zweite Tuner (34) mit der Auswahleinrichtung (35f bis 35j) gekoppelt ist, eine Decodiereinrichtung (36) zum Decodieren des Ausgangssignals des zweiten Tuners (34), eine Anzeigeeinrichtung (35a) zum Anzeigen der ausgewählten Videosignale und der Überblend-Videosignale, einen Audio-Ausgangsanschluß (35b) zum Empfang der ausgewählten Audiosignale, und eine Lautstärkesteuerung (35r) zum Steuern der Amplitude der ausgewählten Audiosignale, die durch den Audio-Ausgangsanschluß (35b) empfangen wurden, wobei der erste Tuner (33) gezwungen wird, die Überblend-Videosignale zu empfangen, wenn das Überblend-Befehlssignal decodiert wird; und

(c) eine Einrichtung (13, 21) zur Übertragung der Multiplexsignale, die von der Multiplexereinrichtung (12) erzeugt wurden, von der Hauptvorrichtung zu jedem Terminal (30).

2. System nach Anspruch 1, bei dem die Kopfvorrichtung eine Speichereinrichtung (9b bis 9h) zum Speichern von Fernsehspiel-Software-Signalen aufweist, wobei die Codiereinrichtung (6, 7) in der Lage ist, die Fernsehspiel-Software-Signale zu codieren, die Multiplexereinrichtung (12) in der Lage ist, die modulierten Fernsehspiel-Software-Signale mit den Videosignalen, den Audiosignalen, den Überblend-Videosignalen und den Überblend-Befehlssignalen multiplexmäßig zu verarbeiten, wobei jedes Terminal (30) eine Einrichtung (35k bis 35m) zum Auswählen von gewünschten Signalen der Fernsehspiel-Software-Signale aufweist, der zweite Tuner (34) in der Lage ist, die ausgewählten Fernsehspiel-Software-Signale zu empfangen und die ausgewählten Fernsehspiel-Software-Signale zur Decodiereinrichtung (36) zu liefern, und wobei jedes Terminal (30) eine Prozessoreinrichtung (37) aufweist, die mit der Decodiereinrichtung (36) gekoppelt ist, um die decodierten ausgewählten Fernsehspiel-Software-Signale zu empfangen und zu verarbeiten.

3. System nach Anspruch 2, bei dem die Überblend-Videosignalerzeugungseinrichtung (5d) weiter so betreibbar ist, entsprechende Überblend-Audiosignale zu erzeugen, wobei die Codiereinrichtung (6, 7) so betreibbar ist, die Überblend-Audiosignale zu codieren, und wobei die Decodiereinrichtung (36) so betreibbar ist, wahlweise die codierten Überblend-Audiosignale zu decodieren, wenn das Überblend-Befehlssignal decodiert wird.

4. System nach Anspruch 3, bei welchem die Hauptvorrichtung ein Mikrophon (5a) aufweist, und eine Mitteilungstaste (5c), die in der Überblend-Befehlssignalerzeugungseinrichtung vorgesehen ist, wobei die Ausgangssignale des Mikrophons (5a) anstelle der Überblend-Audiosignale codiert werden, wenn die Mitteilungstaste (5c) betätigt wird, und die Decodiereinrichtung (36) so betreibbar ist, daß sie wahlweise das Ausgangssignal des Mikrophons (5a) decodiert, wenn der Überblend-Befehl durch die Decodiereinrichtung (36) decodiert wird.

5. System nach Anspruch 2, bei dem der Betrieb der Auswahleinrichtung (35f bis 35j) untersagt wird, wenn der Überblend-Befehl durch die Decodiereinrichtung (36) decodiert wird.

6. System nach Anspruch 3 oder 4, bei dem der Betrieb der Auswahleinrichtung (35f bis 35j) und der Lautstärkesteuerung (35r) untersagt wird, wenn das Überblend-Befehlssignal durch die Decodiereinrichtung 36 decodiert wird.

7. System nach Anspruch 1, bei dem die Überblend-Befehlssignalerzeugungseinrichtung (5) so betreibbar ist, Pausen- oder Stoppsignale für die Video- und die dazugehörige Audiosignalerzeugungseinrichtung (1b bis 1d) und die separate Audiosignalerzeugungseinrichtung (4a, 4b) zu erzeugen, wenn eine Tasteneinrichtung (5c bis 5g) auf der Überblend-Befehlssignalerzeugungseinrichtung betätigt wird, um das Befehlssignal zu erzeugen.

8. System nach Anspruch 7, bei dem die Überblend-Befehlssignalerzeugungseinrichtung (5) so betreibbar ist, Pausenlöschsignale für die Video- und die zugehörige Audiosignalerzeugungseinrichtung (1b bis 1d) und die separate Audiosignalerzeugungseinrichtung (4a, 4b) zu erzeugen, wenn die Tasteneinrichtung (5c bis 5g) wieder betätigt wird.

9. System nach Anspruch 4, bei dem eine Anzeige, die in der Anzeigeeinrichtung (35a) erzeugt wird, unterdrückt wird, wenn die Mitteilungstaste (5c) betätigt wird.

10. System nach Anspruch 2, bei dem der Betrieb der Prozessoreinrichtung (37) durch das Überblend-Befehlssignal untersagt wird.

11. System nach einem der vorhergehenden Ansprüche, bei dem das Überblend-Befehlssignal zumindest ein Adreßsignal enthält, wobei jedes Adreßsignal eines der Terminals (30) identifizieren kann, wobei jedes Terminal (30) eine Einrichtung (52, 53) zur Verarbeitung des Überblend-Befehlssignals aufweist, um zu bestimmen, ob das Überblend-Befehlssignal ein Adreßsignal entsprechend einem besonderen Terminal (30) enthält, und bei dem nur diejenigen Terminals (30), die durch ein Adreßsignal im Befehlssignal identifiziert werden, gezwungen werden, die Überblend-Videosignale zu empfangen.

12. System nach einem der vorhergehenden Ansprüche, wobei jedes Terminal (30) positioniert ist bei und/oder für einen verschiedenen Passagiersitz in einem Passagierfahrzeug arbeitet.

13. System nach Anspruch 12, bei dem das Passagierfahrzeug ein Flugzeug ist.

## Revendications

1. Système de délivrance de messages comportant:

   a) un appareil de tête de réseau comportant des moyens (1b à 1d) pour générer des signaux vidéo et des signaux audio associés, des moyens (4a, 4b) pour générer des signaux audio distincts, des moyens (1a) pour générer des signaux vidéo prioritaires, des moyens (5d) pour générer un signal de commande prioritaire, des moyens de codage (6, 7) pour coder lesdits signaux audio associés, lesdits signaux audio distincts et ledit signal de commande prioritaire, des moyens (11a à 11g) pour moduler lesdits signaux vidéo, lesdits signaux vidéo prioritaires, et le signal codé provenant desdits moyens de codage (6, 7), et des moyens de multiplexage (12) reliés auxdits moyens de modulation (11a à 11g) pour multiplexer en fréquence lesdits moyens vidéo, la totalité desdits signaux audio, lesdits signaux vidéo prioritaires, et ledit signal de commande de priorité ;

   b) une pluralité de terminaux (30), comprenant chacun un moyen de sélection (35f à 35j) pour sélectionner l'un quelconque désiré desdits signaux vidéo et signaux audio associés, et lesdits signaux audio distincts, un premier dispositif d'accord (33) pour recevoir lesdits signaux vidéo sélectionnés et lesdits signaux vidéo prioritaires, un second dispositif d'accord (34) pour recevoir lesdits signaux audio sélectionnés et ledit signal de commande prioritaire, chacun dudit premier dispositif d'accord (33) et du second dispositif d'accord (34) étant couplés aux moyens de sélection (35f à 35j), des moyens de décodage (36) pour décoder le signal de sortie dudit second dispositif d'accord (34), des moyens de visualisation (35a) pour afficher lesdits signaux vidéo sélectionnés et lesdits signaux vidéo prioritaires, une borne de sortie audio (35b) pour recevoir lesdits signaux audio sélectionnés, et une commande de volume (35r) pour commande l'amplitude des signaux audio sélectionnés reçus par la borne de sortie audio (35b), dans lequel ledit premier dispositif d'accord (33) est forcé de recevoir lesdits signaux vidéo prioritaire lorsque ledit signal de commande prioritaire est décodé; et

   c) des moyens (13, 21) pour transmettre des signaux multiplexés générés par les moyens de multiplexage (12) de l'appareil de tête de réseau à chaque terminal (30).

2. Système selon la revendication 1, dans lequel ledit appareil de tête de réseau comporte des moyens de mémorisation (9b à 9h) pour mémoriser des signaux de logiciels de jeux vidéo, lesdits moyens de codage (6, 7) pouvant coder lesdits signaux de logiciels de jeux vidéo, lesdits moyens de multiplexage (12) pouvant multiplexer les signaux de logiciels de jeux vidéo modulés avec les signaux vidéo, les signaux audio, les signaux vidéo prioritaires, et les signaux de commande prioritaires, chaque terminal (30) comporte des moyens (35k à 35m) pour sélectionner des signaux désirés parmi lesdits signaux de logiciels de jeux vidéo, le second dispositif d'accord (34) pouvant recevoir les signaux de logiciels de jeux vidéo sélectionnés et délivrer les signaux de logiciels de jeux vidéo sélectionnés aux moyens de décodage (36), et chaque terminal (30) comporte un processeur (37) couplé aux moyens de décodage (36) pour recevoir et traiter les signaux de logiciels de jeux vidéo sélectionnés décodés.

3. Système selon la revendication 2, dans lequel lesdits moyens (5d) de génération de signaux vidéo prioritaires peuvent en outre agir pour générer des signaux audio prioritaires correspondants, lesdits moyens de codage (6, 7) peuvent agir pour coder les signaux audio prioritaires, et lesdits moyens de décodage (36) sont actionnables sélectivement pour décoder lesdits signaux audio prioritaires codés lorsque ledit signal de commande prioritaire est décodé.

4. Système selon la revendication 3, dans lequel ledit appareil de tête de réseau comporte un microphone (5a), et une touche d'annonce (5c) prévue sur lesdits moyens de génération de signal de commande prioritaire, dans lequel les signaux de sortie dudit microphone (5a) sont codés au lieu desdits signaux audio prioritaires lorsque ladite touche d'annonce prioritaire (5c) est actionnée, et lesdits moyens de décodage (36) sont actionnables sélectivement pour décoder ledit signal de sortie dudit microphone (5a) lorsque ladite commande prioritaire est décodée par lesdits moyens de décodage (36).

5. Système selon la revendication 2, dans lequel un fonctionnement desdits moyens de sélection (35f à 35j) est bloqué lorsque ladite commande prioritaire est décodée par lesdits moyens de décodage (36).

6. Système selon la revendication 3 ou la revendication 4, dans lequel un fonctionnement desdits moyens de sélection (35f à 35j) et de ladite commande de volume (35r) sont bloqués lorsque ledit signal de commande prioritaire est décodé par lesdits moyens de décodage (36).

7. Système selon la revendication 1, dans lequel lesdits moyens (5) de génération de signaux de commande prioritaires sont actionnables pour générer des signaux de pause ou d'arrêt pour lesdits moyens (1b à 1d) générant des signaux vidéo et des signaux audio associés et lesdits moyens (4a, 4b) générant des signaux audio distincts lorsqu'une touche (5c à 5g) sur lesdits moyens de génération du signal de commande prioritaire est actionnée pour générer le signal de commande.

8. Système selon la revendication 7, dans lequel lesdits moyens (5) de génération de signal de commande prioritaire sont actionnables pour générer des signaux de libération de pause pour lesdits moyens (1b à 1d) générant des signaux vidéo et les signaux audio associés et lesdits moyens (4a, 4b) générant des signaux audio distincts lorsque ladite touche (5c à 5g) est à nouveau actionnée.

9. Système selon la revendication 4, dans lequel un affichage généré sur les moyens de visualisation (35a) est supprimé lorsque ladite touche d'annonce (5c) est actionnée.

10. Système selon la revendication 2, dans lequel un fonctionnement dudit processeur (37) est bloqué par ledit signal de commande prioritaire.

11. Système selon l'une quelconque des revendications précédentes, dans lequel ledit signal de commande prioritaire comprend au moins un signal d'adresse, chacun desdits signaux d'adresse identifiant un desdits terminaux (30), dans lequel chaque terminal (30) comprend des moyens (52, 53) pour traiter le signal de commande prioritaire pour déterminer si le signal de commande prioritaire comprend un signal d'adresse correspondant au terminal particulier (30), et dans lequel seuls les terminaux (30) identifiés par un signal d'adresse dans le signal de commande sont contraints de recevoir lesdits signaux vidéo prioritaires.

12. Système selon l'une quelconque des revendications précédentes, dans lequel chaque terminal (30) est disposé en et/ou dessert un siège de passager différent dans un véhicule pour passagers.

13. Système selon la revendication 12, dans lequel ledit véhicule à passagers est un aéronef.

F I G. 1

F I G. 2

F I G. 3

F I G. 4

EP 0 277 015 B1

## F I G. 5A

1 Super-Frame (=256 frames)

| St | F255 | F1 | F2 | F3 | F4 | ---- | F255 | F256 | F1 |

SS    FS    FS                              FS        SS

## F I G. 5B

Frames
$\begin{pmatrix} F1 \\ \S \\ F256 \end{pmatrix}$

1 frame (=168 bits)

$^1/32$ kHz

| SYNC | S B | PCTA | PCTB | PCTC | PCTD | ECC (x4) |

8 bits    4 bits    32 bits    32 bits    32 bits    32 bits    7 bits x4

## F I G. 5C

Packets
$\begin{pmatrix} PCTA \\ \S \\ PCTD \end{pmatrix}$

| M1 | M2 | M3 | M4 | ECC |

8 bits    8 bits    8 bits    8 bits    7 bits

32 kHz, 8 bits, Monaural, 4 Channels

# F I G. 6A

EP 0 277 015 B1

FIG. 6B

77 bits ( 1 channel )

Channels
(CHNA
⟨
CHND)

| WRDA | WRDB | WRDC | WRDD | WRDE | WRDF | WRDG |

11 bits                                          11 bits

FIG. 6C

1 bit        1 bit 1 bit              1 bit        1 bit 1 bit

8 bits                                8 bits

Words
(WRDA
⟨
WRDG)

STRT  DTBT    PRTY  STOP        STRT    DTBT   PRTY  STOP

FIG. 6D

Data bits
(DBTB )X7

| HDER | CMD | ADRS | STTS | CS |

1 byte    1 byte    2 bytes    2 bytes    1 byte

F I G. 7A

FASTEN
SEAT
BELTS

F I G. 7B

NO   SMOKING

F I G. 7C

CUSTOM  AND
IMMIGRATION
FORMS
TUNE CH.5 FOR
INFORMATION

FIG. 8

1a
1b
1c
1d
4a
4b
5
81
8
82
2
3
9a~9h, 10    100
40, 41, 42
6, 7, 11a~11g
12, 13
200
35
31
31    21
21

21

EP 0 277 015 B1